# EUROPEAN PATENT APPLICATION

(11) **EP 4 808 008 A1**
(43) Date of publication of application: **16.09.2026**
(21) Application number: 23958039.2
(22) Date of filing: 10.11.2023
(51) Int. Cl.: H04B 7/06

(54) **BEAM MANAGEMENT METHOD EXECUTED IN TERMINAL DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN)
(74) Representative: Penza, Giancarlo
(86) International application number: PCT/CN2023/131042
(87) International publication number: WO 2025/097436

(57) **Abstract**

Provided are a beam management method executed in a terminal device, and a terminal device. The method comprises: a terminal device executing beam switching triggered by the terminal device; and on the basis of a first condition, the terminal device executing a first behavior or determining whether the beam switching has been successful, wherein the first behavior is associated with a BFR process and/or BFD process of the terminal device.

## Description

### TECHNICAL FIELD

The present disclosure relates to the technical field of communication, and more particularly, to a beam management method performed in a terminal device, and a terminal device.

### BACKGROUND

In order to improve the efficiency of beam management, beam switch triggered by the terminal device may be introduced. However, how to coexist the beam switch triggered by the terminal device with traditional beam management is a problem that needs to be solved.

### SUMMARY

The present disclosure provides a beam management method performed in a terminal device, and a terminal device. Various aspects of the present disclosure are described below.

According to a first aspect, there is provided a beam management method performed in a terminal device, the method includes: the terminal device performs a beam switch triggered by the terminal device; and the terminal device performs a first behavior or determines whether the beam switch is successful based on a first condition, the first behavior is associated with a beam failure recovery (BFR) process and/or a beam failure detection (BFD) process of the terminal device.

According to a second aspect, there is provided a terminal device, including: a first processing module configured to perform beam switch triggered by the terminal device; A second processing module configured to perform a first behavior or determine whether the beam switch is successful based on a first condition, the first behavior is associated with a BFR process and/or a BFD process of the terminal device.

According to a third aspect, there is provided an apparatus including a processor for invoking a program from a memory to cause the apparatus to perform the method of the first aspect.

In the embodiments of the present disclosure, after the beam switch triggered by the terminal device is performed, the terminal device considers the influence of the beam switch on the BFR process and/or the BFD process in the conventional beam management, and adjusts the BFR process and/or the BFD process through the first behavior, which facilitates coexistence between the beam switch procedure triggered by the terminal device and the conventional beam management procedure.

### BRIEF DESCRIPTION OF THE DRAWINGS

FIG. 1 is an example diagram of system architecture of a wireless communication system to which an embodiment of the present disclosure can be applied.
FIG. 2 is an exemplary diagram of a configuration method of a unified transmission configuration indication (TCI) state.
FIG. 3 is another example diagram of a configuration method of a unified TCI state.
FIG. 4 is a schematic structural diagram for activating/deactivating a unified TCI state medium access control control element (MAC CE).
FIG. 5 is a schematic flowchart of a beam management method performed in a terminal device according to an embodiment of the present disclosure.
FIG. 6 is a schematic flowchart of a beam management method performed in a terminal device according to another embodiment of the present disclosure.
FIG. 7 is a schematic flowchart of a beam management method performed in a terminal device according to still another embodiment of the present disclosure.
FIG. 8 is a schematic structural diagram of a terminal device according to an embodiment of the present disclosure.
FIG. 9 is a schematic diagram of a device to which an embodiment of the present disclosure can be applied.

### DETAILED DESCRIPTION

Hereinafter, technical solutions in the present disclosure will be described with reference to the accompanying drawings.

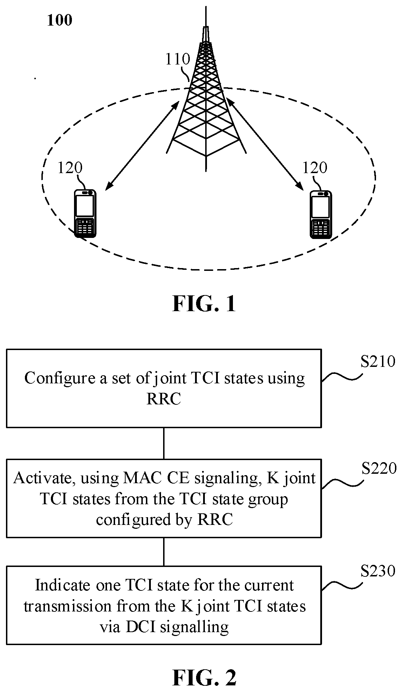

FIG. 1 is an example diagram of a system architecture of a wireless communication system 100 to which an embodiment of the present disclosure can be applied. The wireless communication system 100 may include a network device 110 and a terminal device 120. The network device 110 may be a device in communication with the terminal device 120. The network device 110 may provide network coverage for a particular geographic area and may communicate with the terminal device 120 located within the coverage area. The terminal device 120 may access a network (such as a wireless network) through the network device 110. Optionally, the wireless communication system 100 may further include other network entities such as a network controller and a mobility management entity, and the embodiments of the present disclosure are not limited thereto.

It should be understood that the technical solutions of the embodiments of the present disclosure may be applied to various communication systems, such as a 5G system or a new radio (NR) system, a long term evolution (LTE) system, an LTE frequency division duplex (FDD) system, an LTE time division duplex (TDD). The technical solution provided in the present disclosure may also be applied to future communication systems, such as a sixth generation mobile communication system, a satellite communication system.

The terminal device in the embodiment of the present disclosure may also be referred to as a user equipment (UE), an access terminal, a subscriber unit, a subscriber station, a mobile site, a mobile station (MS), a mobile Terminal (MT), a remote station, a remote terminal, a mobile device, a user terminal, a terminal, a wireless communication device, a user agent, or a user device. The terminal device in the embodiment of the present disclosure may be a device that provides voice and/or data connectivity to a user, and may be used to connect people, objects, and machines such as a handheld device having a wireless connection function, a vehicle-mounted device. The terminal device in the embodiment of the present disclosure may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the terminal device may be used to serve as a base station. For example, a terminal device may serve as a scheduling entity that provides sidelink signals between terminal devices in a vehicle to everything (V2X) or a device to device (D2D) or the like. For example, cellular telephones and automobiles communicate with each other using sidelink signals. The cellular phones and smart home devices communicate with each other without relaying communication signals through base stations.

The network device in the embodiment of the present disclosure may be a device for communicating with the terminal device. The network device may be, for example, an access network device or a radio access network device. For example, the network device may be a base station. The base station may broadly cover or be replaced with various names of a NodeB, an evolved NodeB, a next generation base station, a relay station, an access point, a transmitting and receiving point (TRP), a transmitting point (TP), a home base station, a network controller, an access node, a wireless node, an access piont, a transmission node, a transceiver node, a base band unit, a remote radio unit (RRU), an active antenna unit (AAU), an remote radio head (RRH), a central unit (CU), a distributed unit (DU), a location node, and the like. The base station may be a macro base station, a micro base station, a relay node, a donor node or the like, or a combination thereof.

The terminal device may communicate with the terminal device through a sidelink. The sidelink communication may also be referred to as proximity services (ProSe) communication, unilateral communication, sidelink communication, D2D communication.

The wireless communication system may communicate (e.g., for uplink/downlink transmissions) based on beams. To support beam-based communication, the concept of beam management is introduced in the wireless communications system. Beam management may include processes such as beam indication, configuration, and BFR. The related processes involved in beam management are described below.

In release 15 (R15) and R16 protocols, the uplink channel, the downlink channel, and the reference signal can be transmitted using independent beams. Therefore, the uplink channel, the downlink channel, and the reference signal all need to be beam indicated and configured by separate signalling. For example, a beam of a physical downlink control channel (PDCCH) may be indicated based on a MAC CE transmitted by a network device. Specifically, the network device indicates the TCI state associated with each control resource set (CORESET) through the MAC CE, thereby indicating the beam of the PDCCH based on the TCI state. As another example, a beam of a physical downlink shared channel (PDSCH) may be dynamically indicated based on downlink control information (DCI). Specifically, the DCI may indicate a TCI state for its dynamically scheduled PDSCH, thereby indicating a beam of the PDSCH based on the TCI state. For uplink transmission, beams of a physical uplink control channel (PUCCH) and a sounding reference signal (SRS) may be indicated by spatial relation information per PUCCH resource or per SRS resource.

As can be seen from the above description, the beam management methods provided by the R15 and R16 protocols provide the greatest flexibility and freedom for commercial systems to implement beamforming. Based on the beam management methods provided by the R15 and R16 protocols, the network equipment can freely select any beam for transmission for each channel and reference signal. However, the problem of this beam management method is that the beam switch process will bring excessive signalling overhead and excessive delay. Furthermore, the flexibility and degrees of freedom that this design brings are often undesirable in some practical communication systems. For example, in an actual communication system, multiple downlink channels and multiple uplink channels often use the same beam, and thus it is not necessary to separately indicate the downlink channel and the uplink channel. In addition, another problem with the beam management methods provided by R15 and R16 is that the uplink and downlink beam management adopt two completely different mechanisms, that is, the downlink beam management is a mechanism based on TCI state, and the uplink beam management is a mechanism based on spatial relation information. In order to solve the above problems and better support beam switch with low delay and low signalling overhead, R17 introduces a new beam management mechanism, that is, a beam management mechanism based on a unified TCI framework.

The beam management mechanism based on the unified TCI framework proposed by R17 mainly includes the following two features:
Feature 1: Beam indication for all uplink channels, downlink channels and reference signals are realized by using the unified concept of TCI state.
Feature 2: Beams for the terminal device-specific PDCCH, PDSCH, physical uplink shared channel (PUSCH) and PUCCH are indicated based on a unified TCI status (that is, the transmissions of these channels uses the same beam).

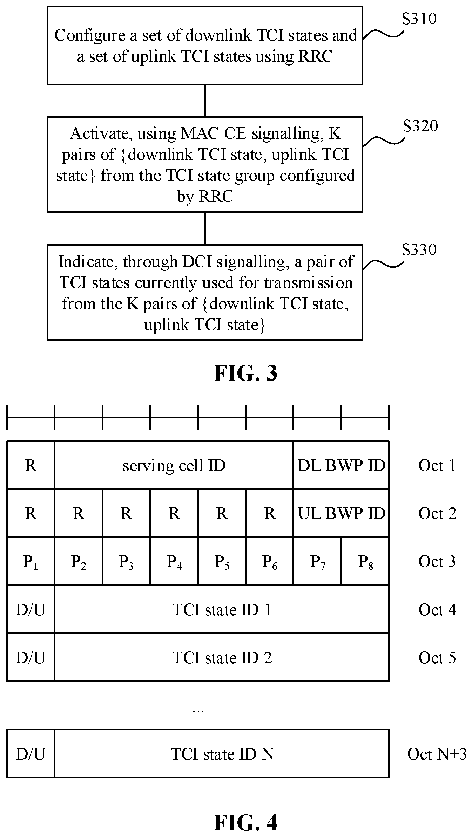

The unified TCI framework uses a combination of radio resource control (RRC), MAC CE and DCI to indicate a joint TCI state or a pair of downlink/uplink TCI states. The configuration and indication process of TCI status under the unified TCI framework are described below with reference to FIGS. 2 and 3 respectively.

With reference to FIG. 2, at block S210, a set of joint TCI states is configured using RRC.

At block S220, K joint TCI states are activated, using MAC CE signalling, from the TCI state group configured by the RRC, where K<=8.

At block S230, one TCI state for the current transmission is indicated by DCI signalling (e.g., DCI format 1_1 or DCI format 1_2) from the K joint TCI states.

With reference to FIG. 3, at block S310, a set of downlink TCI states and a set of uplink TCI states are configured using the RRC.

At block S320, K pairs of {downlink TCI state, uplink TCI state} are activated, using MAC CE signalling, from TCI state group configured by the RRC, where K<=8.

At block S330, a pair of TCI states currently used for transmission is indicated from the K pairs {downlink TCI state, uplink TCI state} through DCI signalling.

In the unified TCI framework, a MAC CE (or unified TCI state activation/deactivation MAC CE) may be identified by a MAC subheader having an extended logical channel identity (eLCID). The MAC CE has a variable size. With reference to FIG. 4, the MAC CE includes the following information fields: a serving cell identity (ID), a downlink bandwidth part identity (DL BWP ID), uplink bandwidth part identity (UL BWP ID), Pᵢ, D/U, TCI state ID (TCI state ID) and R. These information fields are described below.

The information field in which the serving cell ID is located indicates the identity of the serving cell for which the MAC CE applies. The length of this information field is 5 bits. If the serving cell indicated by the information field is configured as part of the cells in simultaneousU-TCI-UpdateList1, simultaneousU-TCI-UpdateList2, simultaneousU-TCI-UpdateList3, or simultaneousU-TCI-UpdateList4 (reference is made to the description of TS 38.331), then the MAC CE applies to all the cells in simultaneousU-TCI-UpdateList1, simultaneousU-TCI-UpdateList2, simultaneousU-TCI-UpdateList3, or simultaneousU-TCI-UpdateList4.

The information field in which the DL BWP ID is located indicates the DL BWP for which the MAC CE applies. The length of the information field in which the DL BWP ID is located is 2 bits.

The information field in which the UL BWP ID is located indicates the UL BWP for which the MAC CE applies. The length of the information field where the UL BWP ID is located is 2 bits.

The information field in which Pᵢ is located indicates whether each TCI codepoint has multiple TCI states or a single TCI state. If the value of Pᵢ is set to 1, it indicates that the i^{th} TCI codepoint includes a DL TCI state and a UL TCI state. If the value of Pᵢ is set to 0, it indicates that the i^{th} TCI codepoint includes only the DL/joint TCI state or the UL TCI state.

The information field in which the D/U is located indicates whether the TCI state ID located in the same octet as the information field is for joint/DL or UL TCI state. If the value of the indication field is set to 1, the TCI state ID in the same octet as the information field is for the joint/DL TCI state. If the value of the indication field is set to 0, the TCI state ID in the same octet as the information field is for the UL TCI state.

The information field in which the TCI status ID is located indicates the TCI status identified by the TCI-StateId (as specified in TS 38.331). If the value of the information field in which the D/U is located is set to 1, 7-bits length TCI state ID (i.e., TCI-StateId) is used (as specified in TS 38.331). If the value of the information field in which the D/U is located is set to 0, the most significant bit of the TCI state ID is the reserved bit, and the remaining 6 bits indicate the TCI-UL-State-Id (as specified in TS 38.331). The maximum number of active TCI states is 16.

R represents the reserved bit, and the value of the reserved bit is typically set to 0.

R15 of NR standardizes the BFR of a primary cell (PCell) or a primary secondary cell (PSCell). After the BFR is triggered, the terminal device may notify the network device which downlink beam to use to transmit a random access response (RAR) in a random access (RA) manner, thereby restoring the downlink beam. In NR, a random access preamble (random access preamble) is configured for a synchronization signal block (SSB). The terminal device first selects an SSB/channel state indication reference signal (CSI-RS) index satisfying a threshold by comparing reference signal received powers (RSRP) (it should be understood that there is a correlation between the SSB and the CSI-RS), and transmits a message 1 (Msg1) using a preamble corresponding to the SSB and a physical random access channel (PRACH) resource. After receiving the preamble, the network device can determine the downlink beam that transmits the RAR (that is, the beam associated with the SSB corresponding to the preamble).

The beam indication and configuration methods are described in detail above. The BFR process is described in detail below.

The BFR generally includes the following operations.

The first operation is BFD. The physical layer of the terminal device determines whether the PDCCH quality satisfies a predetermined/configured threshold (i.e., determines whether the hypothetical PDCCH block error rate (BLER) satisfies the threshold) by measuring the CSI-RS and/or the SSB, thereby determining whether there is a beam failure. If the physical layer detects a beam failure, a beam failure instance (BFI) is reported to the MAC entity (or the MAC layer). For a MAC entity, whenever the physical layer reports a BFI, the value of the counter BFI_COUNTER is incremented by 1, and the beam failure detection timer (beamFailureDetectionTimer) is restarted. When the beamFailureDetectionTimer is running, if the BFI_COUNTER reaches the maximum value, the terminal device considers that a beam failure has occurred, and then initiates a random access procedure.

The second operation is new candidate beam identification. The terminal device selects a new beam satisfying a predetermined/configured threshold through the CSI-RS and/or the SSB.

The third operation is: if no new beam satisfying the predetermined/configured threshold is selected, the terminal device performs random access using a contention-based random access (CBRA) procedure.

The fourth operation is: transmission of beam failure recovery request (beam failure recovery request transmission). The terminal device may select the PRACH corresponding to the new beam to initiate transmission, or may report the selected new beam through the PUCCH.

The fifth operation is: the terminal device monitors the response of the network device to the beam failure recovery request.

In the R16 and R17 protocols, BFR for a secondary cell (SCell) and a transmission and receiving point (TRP) are introduced, respectively. If BFR occurs on the SCell and the TRP, the terminal device may indicate the BFR by reporting the BFR MAC CE.

The beam management method provided by the related technology is described in detail above. As can be seen from the foregoing description, in the beam management method provided by the related art, the beam activation/switching process includes the following two processes: the terminal device performs the measurement reporting and the network device indicates the beam based on the measurement result reported by the terminal device. However, in scenarios where the terminal device moves at high-speed or in high-frequency scenarios, replying on the approach of "measurement reporting by terminal devices and indication by network devices" may result in the beam switch instruction being delivered too late, thereby causing beam failure. To address the above problems, one possible solution is to introduce beam switch triggered by the terminal device. That is, the terminal device can autonomously perform beam switch. However, how the beam switch triggered by the terminal device should coexist with the aforementioned BFD/BFR process is a problem that needs to be solved. If the two cannot coexist properly, they may interfere with each other, resulting in degraded communication quality. For example, as mentioned above, the MAC entity determines whether to trigger the BFR process based on the BFI reported from the physical layer. That is to say, each time the MAC entity receives a BFI, it will restart the corresponding timer (beamFailureDetectionTimer) and increase the value of BFI_COUNTER by 1. When BFI_COUNTER reaches the maximum threshold, the BFR process is triggered. If the BFI_COUNTER does not reach the maximum value, but the terminal device autonomously performs the beam switch, according to the related art, the terminal device does not reset the BFI_COUNTER at this time, which may cause the terminal device to prematurely trigger the BFR process.

In view of the above problems, embodiments of the present disclosure will be described in detail below.

In order to facilitate understanding, the concept of "beam switch triggered by the terminal device (or beam management triggered by the terminal device)" according to the embodiment of the present disclosure will be explained first. In the embodiment of the present disclosure, the beam switch triggered by the terminal device may also be referred to as autonomous beam switch of the terminal device. The beam switch triggered by the terminal device may include, for example, the terminal device tracking, monitoring, or measuring one or more beams. If the measurement results of the one or more beams satisfy certain conditions, the terminal device autonomously performs beam switch.

One or more of the beams mentioned above may be configured by the network device. For example, the network device may configure a beam set (or a beam list) for the terminal device, and the one or more beams described above are beams in the beam set. The beams in the beam set may be indicated in one or more of TCI status, spatial relation information, SSB, CSI-RS resources, SRS, candidate beams, candidate reference signals.

The measurements of the one or more beams mentioned above may include layer 1 (L1) measurements and/or layer 3 (L3) measurements. Objects to be measured may include the RSRP of the one or more beams, reference signal received quality (RSRQ), signal to interference plus noise ratio (SINR) and one or more of BLER.

The above-mentioned conditions under which the terminal device autonomously performs beam switch may be set according to actual needs. For example, the condition may be associated with the channel quality corresponding to the current beam and/or the target beam. For example, if the difference between the channel quality of the target beam and the channel quality of the current beam is greater than the first threshold, the terminal device autonomously performs the beam switch. Alternatively, if the channel quality of the target beam is greater than a second threshold and the channel quality of the current beam is less than a third threshold, the terminal device autonomously performs the beam switch.

It should be understood that "the terminal device autonomously performs the beam switch" may mean that the terminal device directly switches to a new beam for uplink and downlink transmissions. Alternatively, in some cases, "the terminal device autonomously performs the beam switch" may also mean that after the terminal device determines a new beam, the terminal device applies to the network device for switching to the target beam.

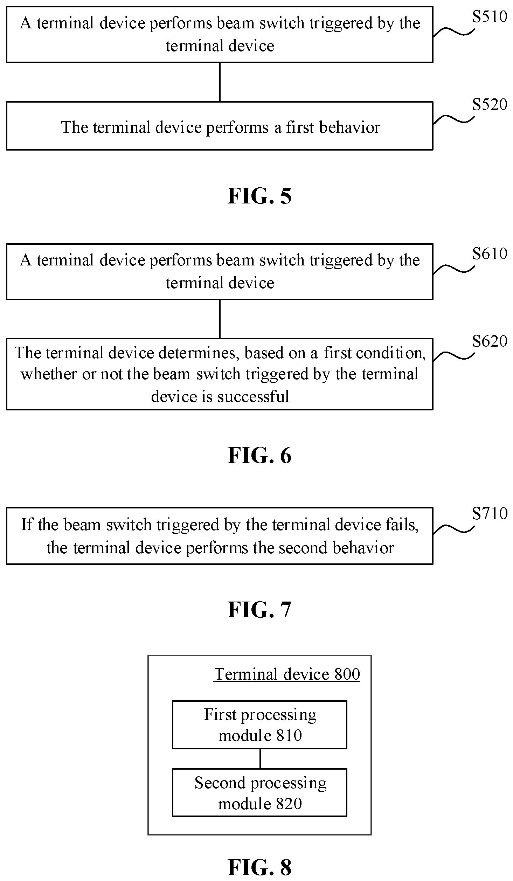

Hereinafter, a beam management method performed in a terminal device according to an embodiment of the present disclosure will be described in detail with reference to FIG. 5. The terminal device may be, for example, the terminal device 120 in FIG. 1.

With reference to FIG. 5, at blocks S510 to S520, a terminal device performs beam switch triggered by the terminal device; and the terminal device performs a first behavior. In other words, the terminal device performs the first behavior in response to the beam switch triggered by the terminal device.

The above-mentioned first behavior refers to behavior associated with the BFR process and/or the BFD process. That is, in the embodiment of the present disclosure, after the beam switch autonomously triggered by the terminal device is performed, the influence of the beam switch on the BFR process and/or the BFD process is considered, and the BFR process and/or the BFD process is adjusted by the first behavior. The introduction of the first behavior helps the "terminal device-triggered beam switch" to coexist well with the BFD/BFR process provided by the related technology, reduces the probability of beam failure, and thus ensures the stability of the communication link.

The first behavior is described in detail below.

In some implementations, the first behavior is associated with a first counter used by the terminal device in the BFD process. The first counter may be used to determine the number of BFIs, and thus, the first counter may be referred to as BFI_COUNTER. For example, after the terminal device performs the terminal device-triggered beam switch, the terminal device resets the first counter (i.e., the first behavior includes resetting the first counter). For another example, after the terminal device performs the beam switch triggered by the terminal device, the terminal device sets the value of the first counter to the initial value of the first counter (i.e., the first behavior includes setting the value of the first counter to the initial value of the first counter). The initial value of the first counter may be 0 or 1. After the terminal device performs the beam switch triggered by the terminal device, the terminal device may have switched to a new beam, and in this case, the terminal device resets the first counter to avoid premature triggering of the BFR, thereby improving the stability of the communication process.

In some implementations, the first behavior is associated with a first timer for the BFR process. The first timer may be a beamFailureRecoveryTimer. The first timer may be started after the terminal device triggers the BFR process. The terminal device may perform contention free random access, CFRA while the first timer is running; after the first timer expires, the terminal device needs to perform CBRA.

In the above implementation, the method of FIG. 5 may include: after the terminal device performs the terminal device-triggered beam switch, the terminal device stops the first timer (i.e., the first behavior includes stopping the first timer). The terminal device may have switched to a new beam after performing the beam switch triggered by the terminal device, and in this case, the terminal device stops the first timer to avoid triggering an unnecessary CBRA process.

In some implementations, the first behavior is associated with a second timer for the BFD process. The second timer may be a beamFailureDetectionTimer. During running of the second timer, if the number of BFIs reported by the physical layer reaches a threshold, the BFR process may be triggered.

In the above implementation, the method of FIG. 5 may include: after the terminal device performs the terminal device-triggered beam switch, the terminal device stops the second timer (i.e., the first behavior includes stopping the second timer). After performing the beam switch triggered by the terminal device, the terminal device may have switched to a new beam, and in this case, the terminal device stops running the second timer to avoid triggering the BFR, thereby improving the stability of the communication procedure.

Alternatively, in the above implementation, the method of FIG. 5 may include starting/restarting the second timer by the terminal device (i.e., the first behavior includes starting/restarting the second timer) after the terminal device performs the beam switch triggered by the terminal device.

It should be understood that the first behavior may be one of the above-mentioned behaviors or a combination of multiple behaviors. For example, in some implementations, after the terminal device performs the terminal device-triggered beam switch, the terminal device may reset the first counter and start/restart the second timer. Resetting the first counter and starting/restarting the second timer can avoid premature triggering of the BFR, thereby improving the stability of the communication process.

Embodiments of the present disclosure do not specifically limit the execution granularity of the first behavior. For example, the first behavior corresponds to one BFD/BFR process. In other words, the first behavior is the behavior for one BFD/BFR process. In other words, the execution granularity of the first behavior is per BFR/BFD process. For example, the terminal device performs the BFR/BFD process on one PCell and one SCell simultaneously. Assuming that the terminal device performs the terminal device-triggered beam switch on the PCell, if the first behavior is of per BFR/BFD process, then the terminal device may perform the above-described first behavior only for the BFD/BFR process on the PCell.

Alternatively, in some implementations, the first behavior may correspond to one terminal device. In other words, the first behavior is a behavior for a terminal device. In other words, the execution granularity of the first behavior is per UE. For example, the terminal device performs the BFR/BFD process on one PCell and one SCell simultaneously. Assuming that the terminal device performs the terminal device-triggered beam switch on the PCell, if the first behavior is per UE, the terminal device may perform the above-described first behavior for both the BFD/BFR processes on the PCell and the SCell.

It should be understood that the embodiments of the present disclosure do not specifically limit the objects to which the BFD/BFR process is directed. For example, the BFD/BFR process may be for one cell (i.e., the BFD/BFR process corresponds to one cell, or the BFD/BFR process is per cell). As another example, the BFD/BFR process may be for one TRP (i.e., the BFD/BFR process corresponds to one TRP, or the BFD/BFR process is per TRP). As another example, the BFD/BFR process may be for one set of RS (i.e., the BFD/BFR process corresponds to one set of RS, or the BFD/BFR process is per set of RS). The set of RS mentioned herein may refer to the set of RS used for the BFD process, that is, the set of BFD-RS.

After performing the beam switch triggered by the terminal device, the terminal device may always perform the above-described first behavior. Alternatively, in some implementations, the first behavior described above may be triggered based on a certain condition (hereinafter referred to as a first condition). The first condition may be associated with one or more of a BFR process, a BFI process, and a BFD process. Setting the first condition for the execution of the first behavior helps the execution of the first behavior to be more reasonable and flexible.

In some implementations, the first condition may include one or more of the following: a BFD process is ongoing; the value of the first counter is not equal to the initial value of the first counter; a BFR process has been triggered; a BFR process is pending; or a BFR MAC CE has been sent, but signalling for scheduling a new transmission sent from a network device has not been received.

For example, if there is a BFD process being executed, the terminal device stops running the second timer for the BFD process after the terminal device performs the terminal device-triggered beam switch.

As another example, if there is a BFD process being executed, the terminal device starts/restarts the second timer for the BFD process after the terminal device performs the beam switch triggered by the terminal device.

For another example, if there is a BFD process being executed, the terminal device resets the first counter after the terminal device performs the terminal device-triggered beam switch.

For another example, if there is a BFD process being executed, after the terminal device performs the beam switch triggered by the terminal device, the terminal device sets the value of the first counter to the initial value of the first counter.

For another example, if the value of the first counter is not equal to the initial value of the first counter, the terminal device resets the first counter after the terminal device performs the beam switch triggered by the terminal device.

For another example, if the value of the first counter is not equal to the initial value of the first counter, the terminal device sets the value of the first counter to the initial value of the first counter after the terminal device performs the beam switch triggered by the terminal device.

For another example, if the value of the first counter is not equal to the initial value of the first counter, the terminal device stops running the second timer after the terminal device performs the beam switch triggered by the terminal device.

For another example, if the value of the first counter is not equal to the initial value of the first counter, the terminal device starts/restarts the second timer after the terminal device performs the beam switch triggered by the terminal device.

As another example, if there is a triggered BFR process, the terminal device stops running the first timer for the BFR process after the terminal device performs the beam switch triggered by the terminal device.

As another example, if there is a pending BFR process, the terminal device stops running the first timer for the BFR process after the terminal device performs the beam switch triggered by the terminal device.

As another example, if the BFR MAC CE has been sent but the signalling for scheduling a new transmission sent by the network device is not received, the terminal device stops running the first timer for the BFR process after the terminal device performs the terminal device-triggered beam switch.

The coexistence problem between the terminal device-triggered beam switch and the BFD/BFR process has been described in detail above. After the beam switch triggered by the terminal device is performed, how the terminal device determines that the network device has also switched to the new beam to perform the corresponding uplink/downlink transmission, or how the terminal device determines that the beam switch triggered by the terminal device is successful (the network device switches to the new beam to be considered successful) is also a problem that needs to be solved.

In view of this problem, a beam tube method executed in a terminal device according to another embodiment of the present disclosure will be described in detail below with reference to FIG. 6.

With reference to FIG. 6, at block S610, a terminal device performs beam switch triggered by the terminal device.

At block S620, the terminal device determines whether or not the beam switch triggered by the terminal device is successful based on the first condition.

In some implementations, the first condition is associated with information transmission on the first beam. The first beam mentioned herein may refer to a new beam determined based on the beam switch triggered by the terminal device.

For example, if the terminal device successfully sends the first uplink information on the first beam, the terminal device determines that the beam switch triggered by the terminal device is successful. That is, the first condition may include that the terminal device successfully sent the first uplink information on the first beam.

The first uplink information may be any type of information. For example, the first uplink information may be information indicating that the terminal device has performed beam switch. The first uplink information may include one or more of: beam information of the first beam, cell information corresponding to the first beam, BWP information corresponding to the first beam, or time information at which the terminal device uses the first beam.

For another example, if the terminal device successfully receives the first downlink information on the first beam, the terminal device determines that the beam switch triggered by the terminal device is successful. That is, the first condition may include that the terminal device successfully receives the first downlink information on the first beam.

The first uplink information may be any type of information. For example, the first downlink information may include one or more of: signalling (e.g., DCI or PDCCH order) for scheduling a new transmission or retransmission, a medium access control protocol data unit (MAC PDU) carried in the PDSCH, or signalling (e.g., MAC CE or DCI, etc.) for indicating success of beam switch.

In some implementations, the first condition may be associated with a usage duration of the first beam. It is determined that the beam switch triggered by the terminal device is successful based on the usage duration of the first beam, and the communication overhead can be saved.

For example, if the usage duration of the first beam is greater than or equal to the first duration, the terminal device determines that the beam switch triggered by the terminal device is successful. That is, the first condition may include that the usage duration of the first beam is longer than or equal to the first duration.

In some implementations, the first condition is associated with a measurement result of the first beam. Determining that the beam switch triggered by the terminal device is successful based on the measurement result of the first beam can save communication overhead.

For example, if the measurement result of the first beam satisfies the first threshold, the terminal device determines that the beam switch triggered by the terminal device is successful. That is, the first condition may include that the measurement result of the first beam satisfies the first threshold.

For another example, if the duration during which the measurement result of the first beam satisfies the first threshold is greater than or equal to the second duration, the terminal device determines that the beam switch triggered by the terminal device is successful. That is, the first condition may include the duration during which the measurement result of the first beam satisfies the first threshold is greater than or equal to the second duration.

In some implementations, the first condition is associated with indication information sent by the network device. The indication information may be beam indication information.

For example, if the terminal device receives information indicating the first beam sent by the network device, the terminal device determines that the beam switch triggered by the terminal device is successful. That is, the first condition may include that the terminal device receives information indicating the first beam sent by the network device.

The forgoing has described in detail the manner in which a terminal device determines the success of a beam switch triggered by the terminal device with reference to FIG. 6. A fallback mechanism in the case of failure of beam switch triggered by the terminal device will be described in detail with reference to FIG. 7. It should be understood that the embodiment shown in FIG. 7 and the embodiment shown in FIG. 6 may be independent of each other or may be combined with each other.

With reference to FIG. 7, at block S710, if the beam switch triggered by the terminal device fails, the terminal device performs the second behavior. The second behavior may include one or more of the following behaviors.

Behavior a: triggering a random access procedure.

Behavior b: performing transmission using the second beam (the second beam refers to the beam used by the terminal device before performing the beam switch triggered by the terminal device, that is, the old beam).

Behavior c: triggering the BFR process.

Behavior d: sending information indicating failure of beam switch to the network device.

Behavior e: Triggering or sending a BFR MAC CE.

In some implementations, the type of the second behavior may be determined based on one or more of: a serving cell (or type of serving cell) for which the beam switch process is directed; or the TRP for which the beam switch process is targeted (or a case where beam switch for one or more TRPs fails).

For example, if the serving cell in which the beam switch fails is a special cell (PCell or SpCell), the terminal device triggers a random access procedure. And/or, if the serving cell in which the beam switch fails is the secondary cell, the terminal device triggers or transmits the BFR MAC CE.

For another example, the current cell is an SpCell, and the SpCell includes TRP1 and TRP2, and the terminal device performs beam switch triggered by the terminal device for TRP1 in the SpCell. If the beam switch performed for TRP1 fails, the terminal device performs one or more of the above-described behaviors a-d. Alternatively, if no BFR occurs in TRP 2, the terminal device performs behavior d. If there is a pending BFR in TRP2 (the pending BFR refers to a triggered and unfinished BFR), the forgoing behavior a or behavior c is performed.

For another example, the current cell is an SpCell, and the SpCell includes TRP1 and TRP2, and the terminal device performs beam switch triggered by the terminal device for TRP1 in the SpCell. If the beam switch performed for TRP1 fails, the terminal device determines whether to perform one or more of the above-described behaviors a-d based on whether there is an ongoing beam switch process triggered by the terminal device in TRP2 in the SpCell. For example, if there is an ongoing beam switch process triggered by the terminal device in TRP 2, the terminal device performs the above behavior a; and/or, if there is no ongoing terminal device-triggered beam switch process in TRP 2, the terminal device performs the above-described behavior d.

The embodiment of the present disclosure does not specifically limit the method in which the terminal device determines that the beam switch triggered by the terminal device has failed. For example, if the terminal device cannot determine that the beam switch triggered by the terminal device is successful within the second time period (or the first condition mentioned in the embodiment of FIG. 6 is not satisfied within the second duration), the terminal device may determine that the beam switch fails.

The second duration may be determined based on a timer (hereinafter referred to as a third timer). The start time of the third timer may be determined based on the time at which the terminal device triggers the beam switch. For example, when the terminal device triggers the beam switch, the terminal device may simultaneously start the third timer. Further, if the terminal device determines that the beam switch triggered by the terminal device is successful, the third timer may be stopped.

In some implementations, during running of the third timer, if a triggered BFR process exists, the terminal device does not perform/suspends a triggered BFR process. During the running of the third timer, the triggered BFR process is not performed/is suspended, so that the BFR process and the beam switch procedure triggered by the terminal device can be avoided from interacting with each other, thereby increasing the probability of successful beam switch triggered by the terminal device.

In some implementations, during running of the third timer, if it is determined that the beam switch triggered by the terminal device is successful, the terminal device cancels the triggered BFR process.

Note that the terminal device performs the terminal device-triggered beam switch in the embodiment of FIG. 5 may mean that the terminal device successfully performs the terminal device-triggered beam switch. That is, the first behavior described in the embodiment of FIG. 5 may be a behavior performed after the beam switch triggered by the terminal device is successful. The determination method of success of the beam switch triggered by the terminal device can be referred to the embodiment of FIG. 6.

Embodiments of the method of the present disclosure are described in detail above with reference to FIGS. 1 to 7, and embodiments of the device of the present disclosure are described in detail below with reference to FIGS. 8 to 9. It should be understood that the description of the method embodiment and the description of the device embodiment correspond to each other, and therefore, the portions not described in detail can be referred to the foregoing method embodiments.

FIG. 8 is a schematic structural diagram of a terminal device according to an embodiment of the present disclosure. The terminal device 800 illustrated in FIG. 8 may be used to perform the method performed by the terminal device in FIG. 5. The terminal device 800 may include a first processing module 810 and a second processing module 820. The first processing module 810 is configured to perform beam switch triggered by the terminal device. The second processing module 820 is configured to perform a first behavior or determine whether the beam switch is successful based on a first condition, the first behavior is associated with a BFR process and/or a BFD process of the terminal device.

In some implementations, the first behavior includes one or more of:
resetting a first counter for determining a number of BFIs;
setting a value of the first counter to an initial value of the first counter;
stopping a first timer for the BFR process;
stopping a second timer for the BFD process; or
starting/restarting the second timer.

In some implementations, the first condition is used to trigger the first behavior, the first condition includes one or more of:
a BFD process is ongoing;
a value of a first counter for determining a number of BFIs is not equal to an initial value of the first counter;
a BFR process has been triggered;
a BFR process is pending; or
a BFR MAC CE has been sent, but signalling for scheduling a new transmission sent from the network device has not been received.

In some implementations, the first condition is used to determine whether the beam switch is successful, the first condition includes one or more of:
the terminal device successfully sends first uplink information on the first beam;
the terminal device successfully receives first downlink information on the first beam;
a usage duration of the first beam is greater than or equal to a first duration;
a measurement result of the first beam satisfies a first threshold;
a duration during which a measurement result of the first beam satisfies the first threshold is greater than or equal to a second duration; or
the terminal device receives indication information of the first beam from the network device.

In some implementations, the first downlink information includes one or more of:
signalling for scheduling a new transmission or a retransmission;
an MAC PDU carried in the PDSCH; or
signalling for indicating success of the beam switch.

In some implementations, the first uplink information is used to indicate that the terminal device has performed the beam switch.

In some implementations, the first uplink information includes one or more of the following:
beam information of the first beam;
cell information corresponding to the first beam;
bandwidth portion BWP information corresponding to the first beam; or
time information of the terminal device using the first beam.

In some implementations, the terminal device 800 further includes a third processing module.

The third processing module is configured to perform a second behavior if the beam switch fails, the second behavior includes one or more of:
triggering a random access procedure;
performing transmission using a second beam;
triggering the BFR process;
sending, to a network device, information indicating failure of beam switch; or
triggering or sending a BFR MAC CE.

The second beam is a beam used by the terminal device before performing the beam switch.

In some implementations, the terminal device 800 further includes fourth processing module.

The fourth processing module is configured to determine that the beam switch fails if the beam switch is not successful a second time period.

In some implementations, the second duration is determined based on a third timer, and a start time of the third timer is determined based on a time at which the terminal device triggers the beam switch.

In some implementations, the terminal device 800 further includes a fifth processing module and/or a sixth processing module.

The fifth processing module is configured to not perform/suspend a triggered BFR process if the BFR process has been triggered during running of the third timer.

The sixth processing module is configured to cancel a triggered BFR process if it is determined that the beam switch is successful during running of the third timer.

In some implementations, the first processing module 810 is configured to: measure one or more beams; and autonomously perform beam switch if a difference between a channel quality of a current beam of the terminal device and a channel quality of a target beam is greater than a first threshold.

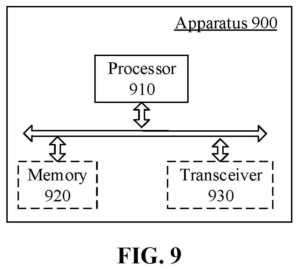

FIG. 9 is a schematic structural diagram of a communication device according to an embodiment of the present disclosure. The dashed line in FIG. 9 indicates that the unit or module is optional. The apparatus 900 may be configured to implement the method described in the forgoing method embodiments. The apparatus 900 may be a chip, a terminal device, or a network device.

The apparatus 900 may include one or more processors 910. The processor 910 may support the apparatus 900 to implement the methods described in the forging method embodiments. The processor 910 may be a general-purpose processor or a special-purpose processor. For example, the processor may be a central processing unit (CPU). Alternatively, the processor may also be another general purpose processor, a digital signal processor (DSP), an application specific integrated circuit (ASIC), an field programmable gate array (FPGA) or other programmable logic device, a discrete gate or transistor logic device, a discrete hardware component, or the like. The general purpose processor may be a microprocessor or the processor may be any conventional processor or the like.

The apparatus 9900 may also include one or more memories 920. The memory 920 stores a program that is executable by the processor 910 to cause the processor 910 to perform the method described in the forgoing method embodiments. The memory 920 may be independent of the processor 910 or may be integrated in the processor 910.

The apparatus 900 may further include a transceiver 930. The processor 910 may communicate with other devices or chips through the transceiver 930. For example, the processor 910 may transmit and receive data with other devices or chips through the transceiver 930.

The embodiment of the present disclosure further provides a computer-readable storage medium for storing a program. The computer-readable storage medium can be applied to the terminal device provided by the embodiment of the present disclosure, and the program causes the computer to execute the method executed by the terminal device in the various embodiments of the present disclosure.

Embodiments of the present disclosure further provide a computer program product. The computer program product includes a program. The computer program product can be applied to the terminal device provided by the embodiment of the present disclosure, and the program causes the computer to execute the method executed by the terminal device in the various embodiments of the present disclosure.

Embodiments of the present disclosure further provide a computer program. The computer program can be applied to the terminal device provided by the embodiment of the present disclosure, and the computer program causes the computer to execute the method executed by the terminal apparatus in the various embodiments of the present disclosure.

It is to be understood that the terms "system" and "network" may be used interchangeably in this disclosure. In addition, the terminology used in the present disclosure is for explanation of specific embodiments of the present disclosure only, and is not intended to limit the present disclosure. The terms "first," "second," "third," and "fourth," etc. in the specification and claims of the present disclosure and the accompanying drawings are used to distinguish different objects, and are not used to describe a specific order. Furthermore, the terms "comprise" and "include" and any variations thereof are intended to cover non-exclusive inclusions.

In the embodiments of the present disclosure, the "indication" mentioned may be a direct indication, an indirect indication, or indicating an associated relationship. For example, A indicates B, which may mean that A directly indicates B, for example, B can be acquired by A; it may also mean that A indicates B indirectly, for example A indicates C, and B can be acquired through C; and it may also be indicated that there is an association relationship between A and B.

In an embodiment of the present disclosure, "B corresponding to A" means that B is associated with A, and B can be determined from A. However, it should also be understood that determining B from A does not mean that B is determined from A alone, and it may also means that B may be determined from A and/or other information.

In the embodiments of the present disclosure, the term "correspondence" may indicate that there is a direct correspondence or indirect correspondence between the two, may indicate that there is a correlation relationship between the two, or may indicate a relationship between indicating and being indicated, configuring and being configured, or the like.

In the embodiment of the present disclosure, "predefined" or "preconfigured" may be realized by storing corresponding codes, tables, or other methods that can be used to indicate relevant information in advance in devices (including, for example, terminal devices and network devices), and the present disclosure does not limit specific implementation methods thereof. For example, "predefined" may refer to "defined in the protocol".

In the embodiment of the present disclosure, the "protocol" may refer to a standard protocol in the communication field, and may include, for example, the LTE protocol, the NR protocol, and related protocols applied to future communication systems, and the present disclosure is not limited thereto.

The term "and/or" in the embodiment of the present disclosure is only an association relationship describing an association object, and indicates that there may be three kinds of relationships, for example, A and/or B, which may indicate that A exists alone, A and B exist simultaneously, and B exists alone. In addition, the character "/" in this article generally indicates that the related objects before and after are in an "or" relationship.

In various embodiments of the present disclosure, the sequence number of the above-described processes does not mean the sequence of execution, and the sequence of execution of each process should be determined by its function and inherent logic, and should not constitute any limitation on the implementation process of the embodiments of the present disclosure.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation. For example, multiple units or components may be combined or integrated into another system, or some features may be ignored or not implemented. In addition, the coupling or direct coupling or communication connection between each other illustrated or discussed may be an indirect coupling or communication connection through some interface, device or unit, which may be electrical, mechanical or otherwise.

The units described as separate units may or may not be physically separate, and the components displayed as units may or may not be physical units, that is, they may be located in one place or may be distributed over multiple network units. Some or all of the units may be selected according to actual needs to achieve the purpose of the solution of the present embodiment.

In addition, each functional unit in various embodiments of the present disclosure may be integrated in one processing unit, and may also be physically present alone. Alternatively, two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer or a data storage device such as a server, a data center, or the like that includes an integration of one or more available media. The available media may be magnetic media (e.g., floppy disk, hard disk, magnetic tape), optical media (e.g., digital video disc (DVD)), or semiconductor media (e.g., solid state disk (SSD)), etc.

The forgoing are merely specific embodiments of the present disclosure, but the scope of protection of the present disclosure is not limited thereto. The changes or substitutions that can be readily conceived by any person skilled in the art within the technical scope disclosed in the present disclosure shall be covered within the scope of protection of the present disclosure. Therefore, the scope of protection of the present disclosure shall be subjected to the scope of protection of the claims.

## Claims

1. A beam management method performed in a terminal device, comprising:
performing, by the terminal device, a beam switch triggered by the terminal device; and
performing, by the terminal device, a first behavior based on a first condition, or determining, by the terminal device, whether the beam switch is successful based on a first condition, the first behavior being associated with a beam failure recovery (BFR) process and/or a beam failure detection (BFD) process of the terminal device.

2. The method of claim 1, wherein the first behavior comprises one or more of:
resetting a first counter for determining a number of beam failure instances (BFIs);
setting a value of the first counter to an initial value of the first counter;
stopping a first timer for the BFR process;
stopping a second timer for the BFD process; or
starting/restarting the second timer.

3. The method of claim 1 or 2, wherein the first condition is used to trigger the first behavior, the first condition comprising one or more of:
a BFD process is ongoing;
a value of a first counter for determining a number of BFIs is not equal to an initial value of the first counter;
a BFR process has been triggered;
a BFR process is pending; or
a BFR medium access control control element (MAC CE) has been sent, but signalling for scheduling a new transmission sent from a network device has not been received.

4. The method of any one of claims 1 to 3, wherein the first condition is used to determine whether the beam switch is successful, and the first condition comprises one or more of:
the terminal device successfully sends first uplink information on the first beam;
the terminal device successfully receives first downlink information on the first beam;
a usage duration of the first beam is greater than or equal to a first duration;
a measurement result of the first beam satisfies a first threshold;
a duration during which a measurement result of the first beam satisfies the first threshold is greater than or equal to a second duration; or
the terminal device receives indication information of the first beam from the network device.

5. The method of claim 4, wherein the first downstream information comprises one or more of:
signalling for scheduling a new transmission or a retransmission;
a MAC protocol data unit (MAC PDU) carried in a physical downlink shared channel (PDSCH); or
signalling for indicating success of the beam switch.

6. The method of claim 4 or 5, wherein the first uplink information is used to indicate that the terminal device has performed the beam switch.

7. The method of claim 6, wherein the first uplink information comprises one or more of:
beam information of the first beam;
cell information corresponding to the first beam;
bandwidth part (BWP) information corresponding to the first beam; or
time information of the terminal device using the first beam.

8. The method of any one of claims 1 to 7, further comprising:
if the beam switch fails, the terminal device performs a second behavior, wherein the second behaviour comprises one or more of:
triggering a random access procedure;
performing transmission using a second beam;
triggering the BFR process;
sending, to a network device, information indicating failure of beam switch; or
triggering or sending a BFR MAC CE,
wherein the second beam is a beam used by the terminal device before performing the beam switch.

9. The method of any one of claims 1 to 8, further comprising:
if the beam switch is not successful within a second duration, the terminal device determines that the beam switch fails.

10. The method of claim 9, wherein the second duration is determined based on a third timer, and a start time of the third timer is determined based on a time at which the terminal device triggers the beam switch.

11. The method of claim 10, further comprising:
during running of the third timer, if the BFR process has been triggered, the terminal device does not perform or suspends the triggered BFR process; and/or
during running of the third timer, if it is determined that the beam switch is successful, the terminal device cancels the triggered BFR process.

12. The method of any one of claims 1 to 11, wherein performing, by the terminal device, the beam switch triggered by the terminal device comprises:
measuring, by the terminal device, one or more beams;
if a difference between a channel quality of a current beam of the terminal device and a channel quality of a target beam is greater than a first threshold, autonomously performing, by the terminal device, the beam switch.

13. A terminal device, comprising:
a first processing module configured to perform beam switch triggered by the terminal device; and
a second processing module configured to perform a first behavior or determine whether the beam switch is successful based on a first condition, the first behavior being associated with a beam failure recovery (BFR) process and/or a beam failure detection (BFD) process of the terminal device.

14. The terminal device of claim 13, wherein the first behavior comprises one or more of:
resetting a first counter for determining a number of beam failure instances (BFIs);
setting a value of the first counter to an initial value of the first counter;
stopping a first timer for the BFR process;
stopping a second timer for the BFD process; or
starting/restarting the second timer.

15. The terminal device of claim 13 or 14, wherein the first condition is used to trigger the first behavior, the first condition comprising one or more of:
a BFD process is ongoing;
a value of a first counter for determining a number of BFIs is not equal to an initial value of the first counter;
a BFR process has been triggered;
a BFR process is pending; or
a BFR medium access control control element (MAC CE) has been sent, but signalling for scheduling a new transmission sent from a network device has not been received.

16. The terminal device of any one of claims 13 to 15, wherein the first condition is used to determine whether the beam switch is successful, and the first condition comprises one or more of:
the terminal device successfully sends first uplink information on the first beam;
the terminal device successfully receives first downlink information on the first beam;
a usage duration of the first beam is greater than or equal to a first duration;
a measurement result of the first beam satisfies a first threshold;
a duration during which a measurement result of the first beam satisfies the first threshold is greater than or equal to a second duration; or
the terminal device receives indication information of the first beam from the network device.

17. The terminal device of claim 16, wherein the first downlink information includes one or more of:
signalling for scheduling a new transmission or a retransmission;
a MAC protocol data unit (MAC PDU) carried in a physical downlink shared channel (PDSCH); or
signalling for indicating success of the beam switch.

18. The terminal device of claim 16 or 17, wherein the first uplink information is used to indicate that the terminal device has performed the beam switch.

19. The terminal device of claim 18, wherein the first uplink information includes one or more of the following:
beam information of the first beam;
cell information corresponding to the first beam;
bandwidth part (BWP) information corresponding to the first beam; or
time information of the terminal device using the first beam.

20. The terminal device of any one of claims 13 to 19, further comprising:
a third processing module configured to perform a second behavior if the beam switch fails, wherein the second behavior comprises one or more of:
triggering a random access procedure;
performing transmission using a second beam;
triggering the BFR process;
sending, to a network device, information indicating failure of beam switch; or
triggering or sending a BFR MAC CE,
wherein the second beam is a beam used by the terminal device before performing the beam switch.

21. The terminal device of any one of claims 13 to 20, further comprising:
a fourth processing module configured to determine that the beam switch fails if the beam switch is not successful within a second duration.

22. The terminal device of claim 21, wherein the second duration is determined based on a third timer, and a start time of the third timer is determined based on a time at which the terminal device triggers the beam switch.

23. The terminal device of claim 22, further comprising:
a fifth processing module configured to not perform or suspend a triggered BFR process if the BFR process has been triggered during running of the third timer; and/or
a sixth processing module configured to cancel a triggered BFR process if it is determined that the beam switch is successful during running of the third timer.

24. The terminal device of any one of claims 13 to 23, wherein the first processing module is further configured to:
measure one or more beams; and
autonomously perform the beam switch if a difference between a channel quality of a current beam of the terminal device and a channel quality of a target beam is greater than a first threshold.

25. A terminal device comprising a transceiver, a memory for storing a program, and a processor for invoking the program in the memory and controlling the transceiver to receive or send signals to cause the terminal device to perform the method of any one of claims 1 to 12.

26. An apparatus comprising a processor for invoking a program from a memory to cause the apparatus to perform the method of any one of claims 1 to 12.
